# EUROPEAN PATENT SPECIFICATION

(11) **EP 2 285 920 B1**
(45) Date of publication and mention of the grant of the patent: **07.09.2016**
(21) Application number: 08746244.6
(22) Date of filing: 18.04.2008
(51) Int. Cl.: C09D 11/00, C09D 11/54, B41J 2/01, B41M 5/52, B41M 7/00

(54) **INK-JET OVERCOAT COMPOSITION AND RELATED SYSTEMS AND METHODS**
FARBSTRAHLÜBERZUGSZUSAMMENSETZUNG UND DAZUGEHÖRIGE SYSTEME UND VERFAHREN
COMPOSITION DE RECOUVREMENT POUR JET D'ENCRE ET SYSTÈMES ET PROCÉDÉS ASSOCIÉS

(43) Date of publication of application: 23.02.2011
(73) Proprietor: Hewlett-Packard Development Company, L.P., Houston, TX 77070 (US)
(72) Inventor: TOM, Howard S., Palo Alto California 94304-1100 (US); GANAPATHIAPPAN, Sivapackia, Palo Alto California 94304-1100 (US)
(74) Representative: Rogers, Alex Lee
(86) International application number: PCT/US2008/060790
(87) International publication number: WO 2009/128833

(56) References cited:
- EP-A2- 0 995 610
- EP-A2- 1 193 078
- WO-A1-2004/089639
- WO-A1-2007/045580
- JP-A- 2005 171 223
- JP-A- 2007 077 371
- US-A1- 2006 199 877
- US-A1- 2007 120 922
- US-B2- 6 779 882

## Description

### BACKGROUND

In ink-jet ink chemistry, the many of commercial ink-jet inks, particularly those available to average consumers, are water-based. Ideally, prints and images are crisp and well-defined on a substrate and maintain the crispness and definition indefinitely. Prints created by using these water-based ink-jet inks tend to have poor durability, such as measured by, e.g., rub resistance, highlighter smear, etc. Rub resistance and highlighter smear are not tests of abnormal conditions for an image, for example on paper where portions may be highlighted, or where the paper may be placed in a stack of papers, or in a folder, etc. As such, the poor durability exhibited by rub resistance and/or highlighter smear can predict poor quality prints in general usage of the ink.

Advances have been made in ink-jet formulation by the incorporation of certain ink-jet compatible latex polymers. These polymers, when included in an ink, can form partial films on a media surface, entrapping and protecting at least some of the colorant. However, not all colorant will necessarily be protected upon printing.

### DETAILED DESCRIPTION

Reference will now be made to the exemplary embodiments of the present disclosure, both those described and those illustrated in the drawing, and specific language will be used herein to describe the same. It will nevertheless be understood that no limitation of the scope of the disclosure is thereby intended. Alterations and further modifications of the inventive features illustrated herein, and additional applications of the principles of the disclosure as illustrated herein, which would occur to one skilled in the relevant art and having possession of this disclosure, are to be considered within the scope of the disclosure.

In describing and claiming the present disclosure, the following terminology will be used.

The singular forms "a," "an," and "the" include plural referents unless the context clearly dictates otherwise. Thus, for example, reference to "a colorant" includes reference to one or more colorants.

As used herein, "liquid vehicle" refers to the fluid in which latex particulates are added to form latex dispersions, such as overcoating compositions. Additionally, "liquid vehicle" is used to refer to the fluid in which colorants are added to form inks, and may optionally include latex particulates and other components. Many liquid vehicles, as well as specific vehicle components that can be used to formulate the liquid vehicles, are known in the art. Typical liquid vehicles can include a mixture of a variety of different agents, such as co-solvents, surfactants, buffers, biocides, sequestering agents, viscosity modifiers, and water. An aqueous-based liquid vehicle includes water as a main component, meaning that of all components of the liquid vehicle, water is the most prevalent.

"Colorant" can include dyes, pigments, and/or other particulates that may be suspended or solvated in a liquid vehicle in accordance with embodiments of the present disclosure. Dyes are typically water soluble and pigments are typically not water soluble. Some dyes, however, have limited solubility and are known as slightly-soluble dyes, or insoluble dyes, as is known in the art. In accordance with the present disclosure, colorant is typically used in ink-jet inks to form images to be coated by the overcoating compositions of the present disclosure.

"Configured to" and "formulated to" refer to the purposeful selection, placement, and/or design to effectuate a predetermined function or purpose. Therefore, configuring something to do something requires first, an identified objective or purpose, and second, selection and designing to reach the purpose or objective. As such, qualities resulting from manufacture without a predetermined (i.e. determined prior to manufacture) objective or purpose are not considered to result from "configured to" or "formulated to" designs.

As used herein, "plurality" refers to more than one. For example, a plurality of inks refers to at least two inks.

As used herein, the term "about" is used to provide flexibility to a numerical range endpoint by providing that a given value may be "a little above" or "a little below" the endpoint. The degree of flexibility of this term can be dictated by the particular variable and would be within the knowledge of those skilled in the art to determine based on experience and the associated description herein.

Concentrations, amounts, and other numerical data may be expressed or presented herein in a range format. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a concentration range of "0.1 wt% to 5 wt%" should be interpreted to include not only the explicitly recited concentration of 0.1 wt% to 5 wt%, but also include individual concentrations and the sub-ranges within the indicated range. Thus, included in this numerical range are individual concentrations, such as 1 wt%, 2 wt%, 3 wt%, and 4 wt%, and sub-ranges, such as from 0.1 wt% to 1.5 wt%, 1 wt% to 3 wt%, from 2 wt% to 4 wt%, from 3 wt% to 5 wt%, etc. This same principle applies to ranges reciting only one numerical value. For example, a range recited as "less than 5 wt%" should be interpreted to include all values and sub-ranges between 0 wt% and 5 wt%. Furthermore, such an interpretation should apply regardless of the breadth of the range or the characteristics being described.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a *de facto* equivalent of any other member of the same list solely based on their presentation in a common group without indications to the contrary.

With this in mind, it has been recognized that it would be advantageous to develop compositions, systems, and methods for improving dry rub resistance and resistance to highlighter smear of a printed image on a substrate. Various details are provided herein which are applicable to each of the overcoating composition or compositions, systems, method of improving dry rub resistance and resistance to highlighter smear of a printed image on a substrate, etc. Thus, discussion of one specific embodiment is related to and provides support for this discussion in the context of the other related embodiments.

According to various aspects of the present disclosure, an overcoating composition for improving dry rub resistance and resistance to highlighter smear of a printed image on a substrate can include an aqueous-based liquid vehicle and about 0.5 wt% to about 40 wt% latex polymer particles dispersed in the liquid vehicle. The latex polymer particles can include about 18 wt% to about 99.5 wt% polymerized hydrophobic monomers and about 0.1 wt% to about 20 wt% polymerized acid monomers. The polymerized hydrophobic monomers can include 4-methylstyrene, cyclohexyl acrylate, isobornyl methacrylate, isobornyl acrylate, and combinations thereof. Additionally, the overcoating composition can be formulated to be ink-jetted onto the substrate and is substantially devoid of colorant.

In accordance with an embodiment of the present disclosure, a method of improving dry rub resistance and/or resistance to highlighter smear of a printed image on a substrate can include ink-jetting an ink, including a colorant, onto a substrate to form a printed image and ink-jetting the overcoating composition onto the printed image. The overcoating compositioin can be formulated as set forth herein as it relates to the overcoating composition disclosure.

Similarly, a system for producing images with improved dry rub resistance and/or resistance to highlighter smear can include a media substrate, an ink-jet ink including a colorant, and an overcoating composition. The ink-jet ink can be formulated for being printed on the media substrate and the overcoating composition can be formulated for coating the ink-jet ink on the media substrate, as set forth herein as it relates to the overcoating composition disclosure.

As noted, an overcoating composition can include from about 0.5 wt% to about 40 wt% latex polymer particles. The latex polymer particles can optionally be present in an amount of from about 1 wt% to about 15 wt%, or from about 3 wt% to about 6 wt%. The latex polymer particles include about 18 wt% to about 99.5 wt% polymerized hydrophobic monomers and about 0.1 wt% to about 20 wt% polymerized acid monomers. The hydrophobic monomers can include those selected from the group of 4-methylstyrene, cyclohexyl acrylate, isobornyl methacrylate, isobornyl acrylate, and combinations thereof. In one aspect, the hydrophobic monomers can include a plurality of monomers selected from the group of 4-methylstyrene, cyclohexyl acrylate, isobornyl methacrylate, isobornyl acrylate, and combinations thereof. In such cases, two, three, or even four types of hydrophobic monomers of the group can be included to account for the about 18 wt% to about 99.5 wt% of polymerized hydrophobic monomers.

The use of the listed hydrophobic monomers directly affects the dry rub resistance of the overcoating composition. As such, the proper selection and incorporation of the hydrophobic monomers, with consideration to the ink-jet architecture and the compatibility with the anticipated substrate, can greatly improve the dry rub resistance of a coated image.

Optionally, additional hydrophobic monomers can be incorporated into the latex polymer particles. Examples of hydrophobic monomers that can be polymerized to form the latex polymer particles include styrene, cyclohexyl methacrylate, butyl acrylate, and combinations thereof. Such additional hydrophobic monomers can be present in any desirable amount provided they contribute to the about 18 wt% to about 99.5 wt% of hydrophobic polymerized monomers. In one aspect, the total amount of polymerized hydrophobic monomers can be present at from about 80 wt% to about 99.5 wt%.

Although substantially any polymerizable acid monomers can be used to form the latex polymer particles, in one aspect, the acid monomers can include one, two, or more acid monomers selected from acrylic acid, methacrylic acid, 3-vinylbenzoic acid, 4-vinylbenzoic acid, methacryloyloxyethyl succinate, methacryloyloxyethyl phosphate, and combinations thereof. In a specific embodiment, the amount of polymerized acid monomer can range from about 0.1 wt% to about 10 wt%.

The acid monomers can be incorporated into the latex polymer particles to provide anionic stabilization of the latex polymer particles in the liquid vehicle. As such, the type and amount can be altered depending on the characteristics of the overall latex polymer particles, the liquid vehicle, the amount of latex polymer particles in the liquid vehicle, etc. Furthermore, these acidic monomers can optionally be neutralized after polymerization to form salts. Raising the pH of the medium is a non-limiting example of a method of forming salts of the polymerized acidic monomers. It is also noted that these monomers can be added later in the polymerization process so that they are concentrated more toward the outer circumference of the individual polymer particulates, in some embodiments.

These coating compositions can be overcoated on dye- and/or pigment-based ink-jet ink produced images to form a coating lattice or protective film that is typically clear, or substantially colorless. In a particular embodiment, the colorant can comprise or consist essentially of dye or consist essentially of pigment. In contrast to the overcoating, films formed of inks that include latex particles in a common vehicle do not typically provide substantially complete encapsulation of the colorant between the media substrate and the film, particularly when the colorant is a dye. A fraction of the colorant can invariably lie on top of or may only be partially trapped by the latex. The use of an overcoat as disclosed herein can provide a definitive barrier between the colorant and the environment, moisture, and/or rubbing structures. As such, the overcoating composition can improve dry rub resistance and resistance to highlighter smear of the printed image.

An overcoat, including latex polymer particles as disclosed herein, can provide still further advantages. For example, an overcoat can include a greater solids content of latex in a composition compared to a composition that contains both a latex and a pigment (as both the pigment and the latex must be considered when determining a total solids amount in an ink-jet ink). This consideration is valuable as the respective coating and ink can be limited in solids content due to certain ink-jet architecture viscosity thresholds. The upper limits of latex polymer particle content of an ink-jet ink are naturally reduced by the presence of pigment. As a result, by separating latex polymer particles from pigment solids, more latex polymer particles can be used in a liquid vehicle, thereby providing more latex polymer particles. Furthermore, the overcoatings of the present application can be applied as a single overcoating or as a plurality of layers of overcoating on an image without significantly altering the color properties.

The glass transition temperature of latex polymer particles can often indicate the printability of the latex polymer particles. As such, the latex polymer particles can fall in the range of about -40°C < T_{g} < 125°C. In an alternative embodiment, the glass transition temperature range can be from about 0°C < T_{g} < 75°C, or even about 15°C < T_{g} < 45°C.

The latex can also be stabilized so that it is protected from thermal shear degradation by the incorporation of a crosslinking agent into the copolymeric latex. For example, from about 0.2 wt% to 15 wt% of such a crosslinking agent can be present in the latex polymer particles. Alternatively, from 1 wt% to 2 wt% of such a crosslinking agent can be used. These crosslinking agents are capable of forming crosslinks between polymer chains in the latex polymer particles. Examples of appropriate crosslinking agents that can be used include ethylene glycol dimethacrylate, pentaerythritol tetraacrylate, di(ethylene glycol) diacrylate, di(ethylene glycol) dimethacrylate, poly(ethylene glycol) dimethacrylate, 1,3-butanediol dimethacrylate, 1,4- butanediol dimethacrylate, 1,6-hexanediol diacrylate, 1,6-hexanediol dimethacrylate, 1,6-hexanediol divinyl ether, divinyl benzene, or other monomers with polymerizable di- or polyfunctional groups. This relatively narrow range of crosslinking can aid in maintaining the integrity of latex polymer particles under the high thermal shear conditions that occur during thermal ink-jet printing, while not adversely impacting its room temperature film-forming properties.

The latex polymer particles of the present disclosure can be prepared through conventional free radical addition of a monomer mixture through emulsion polymerization. Generally, the latex particles of the present disclosure can be prepared by mixing monomers together to form a monomer mixture. A polymerization step can also be carried out to form the latex polymer particles. Surfactant(s) can then be added to the monomer mixture and sheared to form an emulsion. The surfactant(s) can include a reactive surfactant, a non-reactive surfactant, or a combination of reactive and non-reactive surfactants.

Optionally, chain transfer agents of up to about 5 wt% can be added to the polymerization to control the molecular weight of the latex polymer particles. Non-limiting examples of such agents are isooctylmercaptopropionate and halogenated compounds.

The overcoating composition is substantially devoid of colorant and, upon printing onto a substrate, can form a substantially clear coating over the substrate, and enclose any image on the substrate. The overcoating composition can be applied multiple times, thus forming multiple layers, or a thicker, overcoating. In such cases, the overcoating composition is often formulated or configured to form a substantially clear coating, even through multiple layers may be applied.

A typical liquid vehicle formulation that can be used with the latex polymer particles described herein can include water, and optionally, one or more co-solvents present in total at from 0.1 wt% to 45 wt%, depending on the ink-jet pen architecture. Further, one or more non-ionic, cationic, and/or anionic surfactant can optionally be present, ranging from 0.01 wt% to 10 wt%. The balance of the formulation can be water, and other vehicle components known in the art, such as biocides, viscosity modifiers, materials for pH adjustment, sequestering agents, preservatives, and the like. Typically, the liquid vehicle is predominantly water when compared to any other single vehicle component.

Classes of co-solvents that can be used include aliphatic alcohols, aromatic alcohols, diols, glycol ethers, polyglycol ethers, caprolactams, formamides, acetamides, and long chain alcohols. Examples of such compounds include primary aliphatic alcohols, secondary aliphatic alcohols, 1,2-alcohols, 1,3-alcohols, 1,5-alcohols, ethylene glycol alkyl ethers, propylene glycol alkyl ethers, higher homologs of polyethylene glycol alkyl ethers, N-alkyl caprolactams, unsubstituted caprolactams, both substituted and unsubstituted formamides, both substituted and unsubstituted acetamides, and the like. Specific examples of solvents that can be used include trimethylolpropane, 2-pyrrolidinone, and 1,5-pentanediol.

One or more of many surfactants can also be used as are known by those skilled in the art of coating formulations and may be alkyl polyethylene oxides, alkyl phenyl polyethylene oxides, polyethylene oxide block copolymers, acetylenic polyethylene oxides, polyethylene oxide (di)esters, polyethylene oxide amines, protonated polyethylene oxide amines, protonated polyethylene oxide amides, dimethicone copolyols, substituted amine oxides, and the like. The amount of surfactant added to the formulation of the overcoating may range from 0 wt% to 5.0 wt%.

Consistent with the overcoating formulation, various other additives may be employed to optimize the properties of the overcoating composition for specific applications. Examples of these additives are those added to inhibit the growth of harmful microorganisms. These additives may be biocides, fungicides, and other microbial agents, which are routinely used in ink formulations. Examples of suitable microbial agents include, but are not limited to, Nuosept (Nudex, Inc.), Ucarcide (Union carbide Corp.), Vancide (R.T. Vanderbilt Co.), Proxel (ICI America), and combinations thereof.

Sequestering agents, such as EDTA (ethylene diamine tetra acetic acid), may be included to eliminate the deleterious effects of heavy metal impurities, and buffer solutions may be used to control the pH of the ink. From 0 wt% to 2.0 wt%, for example, can be used. Viscosity modifiers and buffers may also be present, as well as other additives known to those skilled in the art to modify properties of the ink as desired. Such additives can be present at from 0 wt% to 20.0 wt%.

As previously noted, a method of improving dry rub resistance and resistance to highlighter smear of a printed image on a substrate can include ink-jetting an ink onto a substrate to form a printed image and ink-jetting an overcoating composition, as described herein, onto the printed image. The ink can include a colorant. In one aspect, the colorant can comprise or consist essentially of a dye. In another embodiment, the colorant can comprise or consist essentially of a pigment. The overcoating composition can be formulated for coating the ink-jet ink on the media substrate, and can be substantially devoid of colorant.

The method can optionally include more than one applications of the overcoating composition. Further, the method can optionally include the step of heat drying the overcoating composition at a temperature of at least about 10° C above room temperature. In one aspect, the drying temperature can be at least about 25° C above room temperature. The heat required for accelerating the drying of the overcoating composition should account for the substrate, and not be within a temperature range that degrades or is otherwise harmful to the substrate.

The step of ink-jetting an ink onto a substrate to form a printed image and ink-jetting an overcoating composition onto the printed image can optionally occur in a single ink-jet pass. Such configuration is known as a "single pass" print. Similarly, in a system for producing images with improved dry rub resistance and resistance to highlighter smear, an overcoating composition and an ink-jet ink can both be configured for printing together in a single pass. Such a configuration generally allows for increased speed in printing and coating. Alternatively, the ink-jet ink and the overcoating composition can be configured for application on separate passes. On a single pass embodiment, it is noted that the ink-jet ink, when applied, does not have time to dry on the substrate before the overcoating composition is applied. Thus, the ink-jet ink and the overcoating composition can be formulated such that the inks are compatible with one another when in a wet condition so that overcoating composition does not substantially alter the printed image when immediately applied thereon.

Ink-jet inks that can be coated with the overcoating compositions of the present disclosure include any ink-jet ink that is functional with a latex polymer particle-including overcoating of the present disclosure. Though ink-jet ink produced images can be overcoated with the compositions described herein, other printed images can also be coated, included laser printer produced images, offset ink printed images, silver halide photographic images, photo copier produced images, and the like.

The overcoating composition can be printed subsequent to the printing of the colored ink, or subsequent to the printing of a previous overcoating, after any time interval that is appropriate for the image to be overcoated. For example, depending on the application, it may be desirable to print the overcoating composition immediately after application of the ink, and in other embodiments, it may be desirable to print the overcoating after several seconds or even minutes. The overcoat nozzles can be included in the same printhead or adjacent printhead as the ink-jet ink, or can be included in a separate architecture.

The overcoating composition can be configured to be printed so as to cover substantially an entire surface of a substrate, or can be configured to print a coating over the areas of the substrate having an image. Alternatively, the overcoating composition can be configured to be printed somewhere in between. The parameters of the ink-jet printer can be configured to ink-jet the overcoating composition in different amounts, at a different velocity, etc., than the settings for the ink. In one aspect, the overcoating composition can be configured to be printed at a greater drop weight than that of the ink-jet ink.

The images coated with the overcoating compositions of the present application exhibit improved dry rub resistance and/or improved resistance to highlighter smear. In a specific embodiment, the overcoating composition ink-jetted on a printed image on a substrate and subjected to rub resistance testing under 4 pounds weight and 10 cycles shows no visible displacement of the underlying printed image. In one aspect, a Sutherland Rub Tester or comparable testing equipment can be used to determine rub resistance. With the Sutherland Rub Tester, the ink and overcoat are printed in a sheet of bright white paper, such as HP Bright White paper. The print to be tested is then mounted to a 4 pound weight and the weight is inverted and placed on top of a blank sheet of paper. The weight is dragged back and forth by the arm of the Rub Tester for 10 cycles. Other settings could be used to judge rub testing, but these are the parameters used in the examples of the present disclosure. As such, the general durability and overall aesthetic appearance of the printed images is improved by the presence of the overcoat.

Furthermore, as the overcoating composition is substantially clear, the optical density of the image is not substantially affected, if at all, by the coating, nor is the color affected. The overcoat additionally increases protection of the image from light, ozone, and water. The use of the overcoating composition allows for a greater set of media substrates to be used due to the improvement in dry rub resistance and resistance to highlighter smear.

### EXAMPLES

The following examples illustrate embodiments of the disclosure that are presently known. Thus, these examples should not be considered as limitations of the present disclosure, but are merely in place to teach how to make the best-known compositions of the present disclosure based upon current experimental data. As such, a representative number of compositions and their method of manufacture are disclosed herein.

### Example 1 - Preparation of latex polymer particles (Type I)

Several latexes are prepared using various monomer combinations as listed in Table 1 (Latexes A-I) and preparing using emulsion polymerization. The general procedure was as follows: A stable emulsion of monomer of about 80 wt% monomers in deionized water is formed. Surfactant, in an amount of less than about 5 wt% with respect to the total monomer content is included in the emulsion. Appropriate surfactant for use includes sodium dodecylsulfate, such as that commercially available Triton's available from Union Carbide, Lutensol AT's available from BASF, or Rhodafac's available from Rhodia. The emulsion is added to water having a temperature of 90° C containing an effective amount of water soluble initiators. It should be noted that Redox initiators can also be used. Examples of initiators include sodium persulfate, potassium persulfate, or ammonium persulfate. The water content is adjusted to obtain 20 wt% to 25 wt% solids content in the mixture. The rate of addition of the emulsion, control of temperature, and solid content will influence the particle size of the latex polymer particles, and thus is monitored and controlled throughout the polymerization. After the addition of the emulsion, the mixture is maintained at 90° C another 2 hours to complete the polymerization reaction. The reaction mixture is then cooled to obtain latex polymer particles with desired particle size and solid content. It should be noted that a mini-emulsion process can alternatively be used to make the latex polymer particles. Table 1 provides latexes prepared in accordance with this general embodiment.

**Table 1**

| **Formula and wt% monomer in latex polymer particles** | A | B | C | D | E | F | G | H | I |
|---|---|---|---|---|---|---|---|---|---|
| Isobornyl methacrylate | 20 | 30 | 50 | 30 | 30 | 30 | 20 | 30 | 50 |
| Butyl acrylate | 74 | 64 | 44 | 68 | 67 | 66 | 73 | 63 | 43 |
| Methacrylic acid | 6 | 6 | 6 | 2 | 3 | 4 | 6 | 6 | 6 |
| Ethylene glycol dimethacrylate | | | | | | | 1 | 1 | 1 |

### Example 2 - Preparation of latex polymer particles (Type II)

Several latexes are prepared according to the procedure described in Example 1, except that the monomers and corresponding weight percentages are outlined in Table 2 (Latexes L-R).

**Table 2**

| **Formula and wt% monomer in latex polymer particles** | J | K | L | M | N | O | P | Q | R |
|---|---|---|---|---|---|---|---|---|---|
| Isobornyl acrylate | 20 | 30 | 50 | 30 | 30 | 30 | 20 | 30 | 50 |
| Butyl acrylate | 74 | 64 | 44 | 68 | 67 | 66 | 73 | 63 | 43 |
| Methacrylic acid | 6 | 6 | 6 | 2 | 3 | 4 | 6 | 6 | 6 |
| Ethylene glycol dimethacrylate | | | | | | | 1 | 1 | 1 |

### Example 3 - Preparation of latex polymer particles (Type III)

Several latexes are prepared according to the procedure described in Example 1, except that the monomers and corresponding weight percentages are outlined in Table 3 (Latexes S-AA).

**Table 3**

| **Formula and wt% monomer in latex polymer particles** | S | T | U | V | W | X | Y | Z | AA |
|---|---|---|---|---|---|---|---|---|---|
| Cyclohexyl acrylate | 20 | 30 | 50 | 30 | 30 | 30 | 20 | 30 | 50 |
| Butyl acrylate | 74 | 64 | 44 | 68 | 67 | 66 | 73 | 63 | 43 |
| Methacrylic acid | 6 | 6 | 6 | 2 | 3 | 4 | 6 | 6 | 6 |
| Ethylene glycol dimethacrylate | | | | | | | 1 | 1 | 1 |

### Example 4 - Preparation of latex polymer particles (Type IV)

Several latexes are prepared according to the procedure described in Example 1, except that the monomers and corresponding weight percentages are outlined in Table 4 (Latexes BB-JJ).

**Table 4**

| **Formula and wt% monomer in latex polymer particles** | BB | CC | DD | EE | FF | GG | HH | II | JJ |
|---|---|---|---|---|---|---|---|---|---|
| 4-methylstyrene | 20 | 30 | 50 | 30 | 30 | 30 | 20 | 30 | 50 |
| Butyl acrylate | 74 | 64 | 44 | 68 | 67 | 66 | 73 | 63 | 43 |
| Methacrylic acid | 6 | 6 | 6 | 2 | 3 | 4 | 6 | 6 | 6 |
| Ethylene glycol dimethacrylate | | | | | | | 1 | 1 | 1 |

### Example 5 - Preparation of overcoat composition

An overcoating composition is prepared by dispersing 8 wt% of the latex polymer particles of Example 1, Latex A, in a liquid vehicle. The liquid vehicle is aqueous-based and additionally includes 25 wt% organic cosolvent, 0.6 wt% surfactant, 0.15 wt% biocide. The overcoating composition is colorless and provides good protection to both pigment-based and dye-based ink-jet inks printed on porous or other media.

### Example 6 - Preparation of test overcoatings

The overcoating composition of Example 5 is filled into multiple ink-jet pens and ink-jetted with a Hewlett-Packard printer onto a printed image on a substrate. Images were printed which included a series of eleven thick (approximately 1/8" thick) parallel lines. The overcoating composition is ink-jetted both in the same pass as the inks including colorant, and (in separate prints) in a separate pass after the inks including colorant have been printed. Of those overcoats printed in the same and different passes, half are allowed to dry at room temperature, and the other half are heat dried at 10°C above room temperature. A number of printed images are left uncoated for later testing. The substrates used were plain white paper, and the ink colorant was a black dye, thus producing a black image on white paper substrate.

### Example 7 - Highlighter smear testing

Images including the overcoat, as prepared in Example 6 are tested and compared to uncoated images. To two separate images, one uncoated, and one uncoated, but otherwise substantially identical, a highlighter of the type Sharpie Accent or Faber-Castell highlighter is placed at a distance of approximately ½ inch away from the printed image. The highlighter tip is dragged across the image, perpendicular to parallel lines at various pressures ranging from 1 to 10 pounds, with 3 pounds being typical. In the case of the images having no overcoat, the area wherein the highlighter contacts the image and substrate shows blurring and significant smearing. In the images with the overcoating (rergardless of how the overcoating was applied), no visible smearing or otherwise alteration to the printed image was visibly detectable.

### Example 8 - Dry rub resistance testing

Images including the overcoat, as prepared in Example 6 are tested and compared to uncoated images. To two separate images, one coated, and one uncoated, but otherwise substantially identical, are subjected to rub testing in a Sutherland rub tester using 4 pounds weight and 10 cycles. In the case of the image having no overcoat, the area of the substrate subjected to the rub testing shows a general gray color and distinctive streaks of colorant. In the image with the overcoating, there is no visible spreading of the ink of the image, leaving a crisp black image on white paper, as before being subjected to rub testing.

While the disclosure has been described with reference to certain preferred embodiments, those skilled in the art will appreciate that various modifications, changes, omissions, and substitutions can be made without departing from the spirit of the disclosure. It is intended, therefore, that the invention be limited only by the scope of the following claims.

## Claims

1. An overcoating composition for improving dry rub resistance and resistance to highlighter smear of a printed image on a substrate, comprising an aqueous-based liquid vehicle and about 0.5 wt% to about 40 wt% latex polymer particles dispersed in the liquid vehicle, said latex polymer particles including:
(a) about 18 wt% to about 99.5 wt% polymerized hydrophobic monomers including monomers selected from the group of 4-methylstyrene, cyclohexyl acrylate, isobornyl methacrylate, isobornyl acrylate, and combinations thereof, and
(b) about 0.1 wt% to about 20 wt% polymerized acid monomers,
wherein the overcoating composition is formulated to be ink-jetted onto the substrate and is substantially devoid of colorant.

2. A composition as in claim 1, comprising at least two polymerized acid monomers selected from the group of acrylic acid, methacrylic acid, 3-vinylbenzoic acid, 4-vinylbenzoic acid, methacryloyloxyethyl succinate, methacryloyloxyethyl phosphate, and combinations thereof, or at least two polymerized hydrophobic monomers selected from the group of 4-methylstyrene, cyclohexyl acrylate, isobornyl methacrylate, isobornyl acrylate, and combinations thereof.

3. A composition as in claim 1, wherein the latex polymer particles dispersed in the liquid vehicle are present in an amount from about 1 wt% to about 15 wt%.

4. A composition as in claim 1, wherein when the overcoating composition is ink-jetted over a printed image on a substrate and subjected to rub resistance testing on bright white paper and under 4 pounds weight and 10 cycles shows no visible displacement of the underlying printed image.

5. A composition as in claim 1, further comprising from about 0.2 wt% to about 15 wt% of crosslinking agent based on the total monomer content.

6. A method of improving dry rub resistance and resistance to highlighter smear of a printed image on a substrate, comprising:
(a) ink-jetting an ink, including a colorant, onto a substrate to form a printed image; and
(b) ink-jetting an overcoating composition onto the printed image, the composition including an aqueous-based liquid vehicle and about 0.5 wt% to about 40 wt% latex polymer particles dispersed in the liquid vehicle, said latex polymer particles including
(i) about 18 wt% to about 99.5 wt% polymerized hydrophobic monomers including polymerized monomers selected from the group of 4-methylstyrene, cyclohexyl acrylate, isobornyl methacrylate, isobornyl acrylate, and combinations thereof, and
(ii) about 0.1 wt% to about 20 wt% polymerized acid monomers,
wherein the overcoating composition is formulated for coating the ink-jet ink on the media substrate, and is substantially devoid of colorant.

7. A method as in claim 6, further comprising the step of heat drying the overcoating composition at a temperature at least 10° C above room temperature.

8. A method as in claim 6, wherein the steps of ink-jetting the ink onto a substrate to form a printed image and ink-jetting the overcoating composition onto the printed image occur in a single pass of an ink-jet printhead.

9. A method as in claim 6, wherein the step of ink-jetting the overcoating composition includes ink-jetting multiple layers of overcoating composition over the printed image.

10. A system for producing images with improved dry rub resistance and resistance to highlighter smear, comprising:
(a) a media substrate;
(b) an ink-jet ink including a colorant, said ink-jet ink formulated for being printed on the media substrate; and
(c) an overcoating composition including an aqueous-based liquid vehicle and about 0.5 wt% to about 40 wt% latex polymer particles dispersed in the liquid vehicle, said latex polymer particles including
(i) about 18 wt% to about 99.5 wt% polymerized hydrophobic monomers selected from the group of 4-methylstyrene, cyclohexyl acrylate, isobornyl methacrylate, isobornyl acrylate, and combinations thereof, and
(ii) about 0.1 wt% to about 20 wt% polymerized acid monomers,
wherein the overcoating composition is formulated for coating the ink-jet ink on the media substrate, and is substantially devoid of colorant.

11. A system as in claim 10, wherein the ink-jet ink and the overcoating composition are configured for printing together in a single pass of a printhead.

12. A system as in claim 10, wherein the overcoating composition is configured to be printed at a greater drop weight than that of the ink-jet ink.

13. A system as in claim 10, wherein the colorant is a pigment or a dye.

14. A composition according to claim 1, wherein the polymerized acid monomers are selected from the group of acrylic acid, methacrylic acid, 3-vinylbenzoic acid, 4-vinylbenzoic acid, methacryloyloxyethyl succinate, methacryloyloxyethyl phosphate, and combinations thereof.

15. A composition according to claim 1, wherein the polymerized hydrophobic monomers of the overcoating composition also include polymerized monomers selected from the group of styrene, cyclohexyl methacrylate, butyl acrylate, and combinations thereof.

## Patentansprüche

1. Überzugszusammensetzung zum Verbessern von Trockenreibwiderstand und Textmarker-Schmierbeständigkeit auf einem gedruckten Bild auf einem Substrat, umfassend eine flüssige Trägersubstanz auf wässriger Basis und etwa 0,5 Gew.-% bis etwa 40 Gew.-% in der flüssigen Trägersubstanz dispergierte Latexpolymerpartikel, wobei die Latexpolymerpartikel Folgendes enthalten:
(a) etwa 18 Gew.-% bis etwa 99,5 Gew.-% polymerisierte hydrophobe Monomere, einschließlich Monomere, die ausgewählt sind aus der Gruppe aus 4-Methylstyrol, Cyclohexylacrylat, Isobornylmethacrylat, Isobornylacrylat und Kombinationen aus diesen, und
(b) etwa 0,1 Gew.-% bis etwa 20 Gew.-% polymerisierte Säuremonomere,
wobei die Überzugszusammensetzung formuliert ist, auf das Substrat tintengestrahlt zu werden, und im Wesentlichen frei von Färbemittel ist.

2. Zusammensetzung nach Anspruch 1, umfassend wenigstens zwei polymerisierte Säuremonomere, ausgewählt aus der Gruppe aus Acrylsäure, Methacrylsäure, 3-Vinylbenzoesäure, 4-Vinylbenzoesäure, Methacryloyloxyethylsuccinat, Methacryloyloxyethylphosphat und Kombinationen aus diesen, oder wenigstens zwei polymerisierte hydrophobe Monomere, ausgewählt aus der Gruppe aus 4-Methylstyrol, Cyclohexylacrylat, Isobornylmethacrylat, Isobornylacrylat und Kombinationen aus diesen.

3. Zusammensetzung nach Anspruch 1, wobei die in der flüssigen Trägersubstanz dispergierten Latexpolymerpartikel in einer Menge von etwa 1 Gew.-% bis etwa 15 Gew.-% vorliegen.

4. Zusammensetzung nach Anspruch 1, wobei, wenn die Überzugszusammensetzung über ein gedrucktes Bild auf einem Substrat tintengestrahlt wird und Reibwiderstandprüfungen auf hellem weißen Papier unter 4 Ib Gewicht mit 10 Durchläufen ausgesetzt wird, keine sichtbare Verlagerung des darunterliegenden gedruckten Bildes zu sehen ist.

5. Zusammensetzung nach Anspruch 1, ferner umfassend von etwa 0,2 Gew.-% bis etwa 15 Gew.-% Vernetzungsmittel auf der Grundlage des gesamten Monomergehalts.

6. Verfahren zum Verbessern von Trockenreibwiderstand und Textmarker-Schmierbeständigkeit eines gedruckten Bildes auf einem Substrat, Folgendes umfassend:
(a) Tintenstrahlen einer Tinte, einschließlich eines Färbemittels, auf ein Substrat, um ein gedrucktes Bild auszubilden; und
(b) Tintenstrahlen einer Überzugszusammensetzung auf das gedruckte Bild, wobei die Zusammensetzung eine flüssige Trägersubstanz auf wässriger Basis und etwa 0,5 Gew.-% bis etwa 40 Gew.-% in der flüssigen Trägersubstanz dispergierte Latexpolymerpartikel enthält, wobei die Latexpolymerpartikel Folgendes enthalten:
(i) etwa 18 Gew.-% bis etwa 99,5 Gew.-% polymerisierte hydrophobe Monomere, einschließlich polymerisierter Monomere, die ausgewählt sind aus der Gruppe aus 4-Methylstyrol, Cyclohexylacrylat, Isobornylmethacrylat, Isobornylacrylat und Kombinationen aus diesen, und
(ii) etwa 0,1 Gew.-% bis etwa 20 Gew.-% polymerisierte Säuremonomere, wobei die Überzugszusammensetzung formuliert ist, die Tintenstrahltinte auf dem Mediensubstrat zu überziehen, und im Wesentlichen frei von Färbemittel ist.

7. Verfahren nach Anspruch 6, ferner den Schritt des Wärmetrocknens der Überzugszusammensetzung bei einer Temperatur von wenigstens 10 °C über Raumtemperatur umfassend.

8. Verfahren nach Anspruch 6, wobei die Schritte des Tintenstrahlens der Tinte auf ein Substrat zum Ausbilden eines gedruckten Bildes und des Tintenstrahlens der Überzugszusammensetzung auf das gedruckte Bild in einem einzigen Durchlauf eines Tintenstrahldruckkopfs stattfinden.

9. Verfahren nach Anspruch 6, wobei der Schritt des Tintenstrahlens der Überzugszusammensetzung das Tintenstrahlen von mehreren Schichten von Überzugszusammensetzung über das gedruckte Bild enthält.

10. System zum Erzeugen von Bildern mit verbessertem/r Trockenreibwiderstand und Textmarker-Schmierbeständigkeit, Folgendes umfassend:
(a) ein Mediensubstrat;
(b) eine Tintenstrahltinte, enthaltend ein Färbemittel, wobei die Tintenstrahltinte formuliert ist, um auf das Mediensubstrat gedruckt zu werden; und
(c) eine Überzugszusammensetzung, einschließlich einer flüssigen Trägersubstanz auf wässriger Basis und etwa 0,5 Gew.-% bis etwa 40 Gew.-% in der flüssigen Trägersubstanz dispergierter Latexpolymerpartikel, wobei die Latexpolymerpartikel Folgendes enthalten:
(i) etwa 18 Gew.-% bis etwa 99,5 Gew.-% polymerisierte hydrophobe Monomere, ausgewählt aus der Gruppe aus 4-Methylstyrol, Cyclohexylacrylat, Isobornylmethacrylat, Isobornylacrylat und Kombinationen aus diesen, und
(ii) etwa 0,1 Gew.-% bis etwa 20 Gew.-% polymerisierte Säuremonomere, wobei die Überzugszusammensetzung formuliert ist, die Tintenstrahltinte auf dem Mediensubstrat zu überziehen, und im Wesentlichen frei von Färbemittel ist.

11. System nach Anspruch 10, wobei die Tintenstrahltinte und die Überzugszusammensetzung konfiguriert sind, in einem einzigen Durchlauf eines Druckkopfs gemeinsam gedruckt zu werden.

12. System nach Anspruch 10, wobei die Überzugszusammensetzung konfiguriert ist, mit einem größeren Tropfengewicht als dem der Tintenstrahltinte gedruckt zu werden.

13. System nach Anspruch 10, wobei das Färbemittel ein Pigment oder ein Farbstoff ist.

14. Zusammensetzung nach Anspruch 1, wobei die polymerisierten Säuremonomere ausgewählt sind aus der Gruppe aus Acrylsäure, Methacrylsäure, 3-Vinylbenzoesäure, 4-Vinylbenzoesäure, Methacryloyloxyethylsuccinat, Methacryloyloxyethylphosphat und Kombinationen aus diesen.

15. Zusammensetzung nach Anspruch 1, wobei die polymerisierten hydrophoben Monomere der Überzugszusammensetzung auch polymerisierte Monomere enthalten, die ausgewählt sind aus der Gruppe aus Styrol, Cyclohexylmethacrylat, Butylacrylat und Kombinationen aus diesen.

## Revendications

1. Composition de revêtement permettant d'améliorer la résistance au frottement à sec et la résistance à une traînée de surligneur d'une image imprimée sur un substrat, comprenant un véhicule liquide à base d'eau et environ 0,5 à 40 % en poids de particules de polymère de latex dispersées dans le véhicule liquide, lesdites particules de polymère de latex contenant :
(a) environ 18 à 99,5 % en poids de monomères hydrophobes polymérisés comprenant des monomères choisis dans l'ensemble du 4-méthylstyrène, de l'acrylate de cyclohexyle, du méthacrylate d'isobornyle, de l'acrylate d'isobornyle et de leurs combinaisons, et
(b) environ 0,1 à 20 % en poids de monomères acides polymérisés, la composition de revêtement étant formulée pour être projetée sous forme d'encre sur le substrat et étant sensiblement dépourvue de colorant.

2. Composition selon la revendication 1, contenant au moins deux monomères d'acide polymérisé choisis dans l'ensemble constitué de l'acide acrylique, de l'acide méthacrylique, de l'acide 3-vinylbenzoïque, de l'acide 4-vinylbenzoïque, du succinate de méthacryloyloxyéthyle, du phosphate de méthacryloyloxyéthyle et leurs combinaisons, ou au moins deux monomères hydrophobes polymérisés choisis dans l'ensemble constitué du 4-méthylstyrène, de l'acrylate de cyclohexyle, du méthacrylate d'isobornyle, de l'acrylate d'isobornyle et de leurs combinaisons.

3. Composition selon la revendication 1, dans lequel les particules de polymère de latex dispersées dans le véhicule liquide sont présentes à raison d'environ 1 % en poids à environ 15 % en poids.

4. Composition selon la revendication 1, dans laquelle quand la composition de revêtement est imprimée par jet d'encre sur une image imprimée sur un substrat et soumise à un essai de résistance par frottement sur du papier blanc brillant et à moins de 4 livres de poids et 10 cycles ne montre aucun déplacement visible de l'image imprimée sous-jacente.

5. Composition selon la revendication 1, comprenant en outre d'environ 0,2 à 15 % en poids d'agent de réticulation sur la teneur totale en monomère.

6. Procédé d'amélioration de la résistance au frottement à sec et de la résistance aux traînées de surligneur d'une image imprimée sur un substrat, comprenant :
(a) imprimer une encre au jet d'encre, contenant un colorant, sur un substrat, pour former une image imprimée ; et
(b) imprimer au jet d'encre une composition de revêtement sur l'image imprimée, la composition contenant un véhicule liquide à base aqueuse et environ 0,5 à 40 % en poids de particules de polymère de latex dispersées dans le véhicule liquide, lesdites particules de polymère de latex contenant
(i) environ 18 à 99,5 % en poids de monomères hydrophobes polymérisés comprenant des monomères polymérisés choisis dans l'ensemble constitué du 4-méthylstyrène, de l'acrylate de cyclohexyle, du méthacrylate d'isobornyle, de l'acrylate d'isobornyle et de leurs combinaisons, et
(ii) environ 0,1 à 20 % en poids de monomères d'acide polymérisés, la composition de revêtement étant formulée pour enduire l'encre imprimée au jet d'encre sur le substrat de support, et étant sensiblement exempte de colorant.

7. Procédé selon la revendication 6, comprenant en outre l'étape de séchage à chaud de la composition de revêtement à une température d'au moins 10 °C au-dessus de la température ambiante.

8. Procédé selon la revendication 6, dans lequel les étapes d'impression par jet d'encre de l'encre sur un substrat pour former une image imprimée et d'impression par jet d'encre de la composition de revêtement sur l'image imprimée en un seul passage d'une tête d'impression par jet d'encre.

9. Procédé selon la revendication 6, dans lequel l'étape d'impression au jet d'encre de la composition de revêtement contient de multiples couches de jet d'encre de composition de revêtement sur l'image imprimée.

10. Système de production d'images à résistance améliorée contre le frottement à sec et à résistance améliorée aux traînées de surligneur, comprenant :
(a) un substrat de support ;
(b) une encre à jet d'encre contenant un colorant, ladite encre à jet d'encre étant formulée pour être imprimée sur le substrat du support ; et
(c) une composition de revêtement comprenant un véhicule liquide à base aqueuse et environ 0,5 à 40 % en poids de particules de polymère de latex dispersées dans le véhicule liquide, lesdites particules de polymère de latex contenant
(i) environ 18 à 99,5 % en poids de monomères hydrophobes polymérisés choisis dans l'ensemble du 4-méthylstyrène, de l'acétate de cyclohexyle, du méthacrylate d'isobornyle, de l'acrylate d'isobornyle et de leurs combinaisons, et
(ii) environ 0,1 à 20 % en poids de monomères acides polymérisés, la composition de revêtement étant formulée pour enduire d'encre de jet d'encre sur le substrat et étant sensiblement dépourvue de colorant.

11. Système selon la revendication 10, dans lequel l'encre d'impression par jet d'encre et la composition de revêtement sont conçues pour imprimer ensemble lors d'un seul passage d'une tête d'impression.

12. Système selon la revendication 10, dans lequel la composition de revêtement est conçue pour être imprimée à un poids supérieur de goutte que celle de l'encre de jet d'encre.

13. Système selon la revendication 10, dans lequel le colorant est un pigment ou une teinture.

14. Composition selon la revendication 1, dans laquelle les monomères acides polymérisés sont choisis dans l'ensemble de l'acide acrylique, de l'acide méthacrylique, de l'acide 3-vinylbenzoïque, de l'acide 4-vinylbenzoïque, le succinate de méthacryloyloxyéthyle, le phosphate de méthacryloyloxyéthyle et leurs combinaisons.

15. Composition selon la revendication 1, dans laquelle les monomères hydrophobes polymérisés de la composition de revêtement comprennent aussi des monomères polymérisés choisis dans l'ensemble du styrène, du méthacrylate de cyclohexyle, de l'acrylate de butyle et de leurs combinaisons.
